# EUROPEAN PATENT SPECIFICATION

(11) **EP 1 474 281 B1**
(45) Date of publication and mention of the grant of the patent: **09.08.2006**
(21) Application number: 03737366.9
(22) Date of filing: 06.02.2003
(51) Int. Cl.: B29C 69/00, F16K 15/03

(54) **FLAP VALVE**
KLAPPENVENTIL
CLAPET A BATTANT

(30) Priority: 06.02.2002 GB 0202730
(43) Date of publication of application: 10.11.2004
(73) Proprietor: Scopenext Ltd., Coventry CV4 7EZ (GB)
(72) Inventor: SMITH, Richard, Stoney Stanton, Leicestershire LE9 4HA (GB)
(74) Representative: Dearing-Lambert, Peter Richard
(86) International application number: PCT/GB2003/000508
(87) International publication number: WO 2003/066316

(56) References cited:
- GB-A- 2 342 427
- US-A- 6 026 852
- US-A- 6 165 215
- PATENT ABSTRACTS OF JAPAN vol. 007, no. 104 (M-212), 6 May 1983 (1983-05-06) & JP 58 025942 A (NANBA PRESS KOGYO KK), 16 February 1983 (1983-02-16)
- PATENT ABSTRACTS OF JAPAN vol. 016, no. 328 (M-1281), 16 July 1992 (1992-07-16) & JP 04 093216 A (MATSUSHITA ELECTRIC IND CO LTD), 26 March 1992 (1992-03-26)

## Description

This invention relates to an improved flap valve, and more particularly to an improved flap valve having an internal valve seat made by injection moulding a plastics material.

It is well known that an item to be injection moulded cannot have any re-entrant areas. In a flap valve with an internal valve seat it is usual for the bore of the valve to widen under the valve seat. It has not been thought possible to make such a flap valve in a single injection moulding operation, so that it has been thought necessary to make the valve in at least two parts in separate moulds, or separate mould cavities.

GB-A-2342427 discloses the production of a flap valve by a moulding process but in this example the flap extends over one end of a pipe.

The principal object of the present invention is to make possible the manufacture of a flap valve with an internal valve seat in one piece in a single mould cavity, thereby significantly reducing manufacturing costs.

In accordance with the invention there is provided a flap valve having an internal valve seat manufactured in one piece by an injection moulding procedure utilising a single mould cavity, the valve comprising first and second tubular portions connected by a flexible strip, the first portion having a hingeable internal flap and the second portion terminating at an end thereof spaced from the flexible strip in an annular valve seat which may socket within the first portion in a position to be spanned by the flap when the latter is transverse to said first portion.

Preferably the valve seat is at the distal end of a reduced-diameter end region of the second portion dimensioned to be received as a friction fit within the first portion, there being an annular shoulder between said reduced-diameter end region and the remainder of the second portion which will abut the first portion to limit further telescopic movement of the second portion into the first portion when the valve seat is correctly positioned relative to the flap.

A rebate may be provided in the interior of the first portion to receive the shoulder of the second portion.

The flap is preferably hingeably connected to the internal wall of the first portion by a stem of reduced thickness extending radially of the flap, the flap being otherwise unconnected to the first portion.

The length of the flexible strip is preferably just sufficient to allow relative rotation of the first and second portions until the valve seat end of the second portion can be inserted into the nearer end of the first portion.

The first and second portions are preferably moulded in a mutually inverted and longitudinally offset relationship, the flexible strip extending between the nearer ends of the portions in a plane to which the axes of the portions are generally perpendicular.

A preferred embodiment of the present invention will now be described by way of non-limitative example with reference to the accompanying drawings, in which:
- Figure 1: is a sectional elevation illustrating a flap valve according to the invention in the form in which it lies within the single cavity of a mould, and
- Figure 2: is a sectional elevation of the valve of Figure 1 in its assembled condition.

The flap valve illustrated has two tubular portions 10 and 11 joined by a flexible strip 12. The provision of the strip 12 enables both tubular portions 10 and 11 to be injection moulded from a plastics material in a single mould cavity. A flap 13 is hingeably connected to the internal wall of the tubular portion 10 by a narrow stem 14. The end region 15 of the tubular portion 11 remote from the strip 12 is of reduced diameter so as to be a friction fit within the tubular portion 10 below the flap 13. It terminates in a further reduced-diameter end 16 which provides the valve seat. Preferably and as shown the end of the tubular portion 10 which is connected to the strip 12 has an internal annular rebate 17 which is abutted by the shoulder formed between the part 15 of the portion 11 and its remainder when the valve seat 16 has reached a position within the portion 10 such that the flap 13 may rest on it when extending transversely to the portion 10.

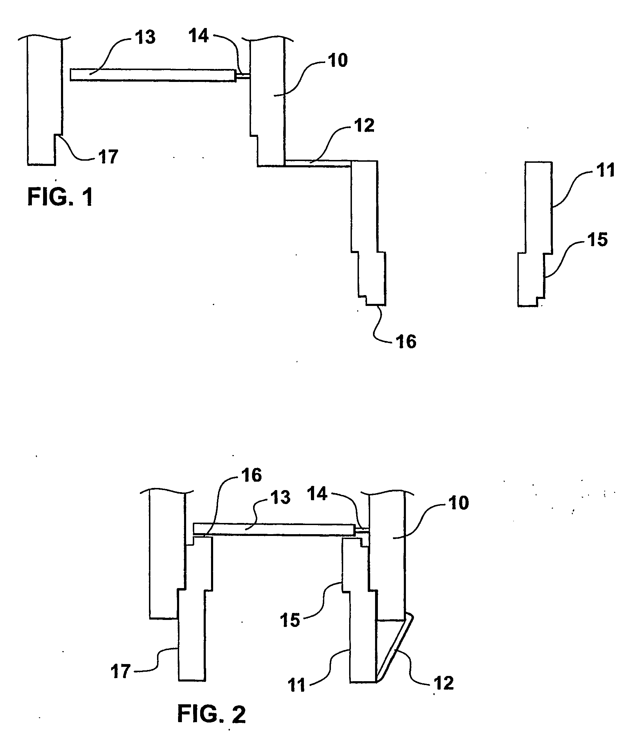

After moulding the valve with its two tubular portion 10 and 11 in a mutually inverted and longitudinally offset relationship as shown in Figure 1 the portion 11 is rotated so that its end region 15 can be forced into the end of the portion 10 from which the strip 12 extends, the latter serving as a hinge. If the strip 12 is of only just sufficient length to permit this there is no danger that the portion 11 may be fitted to the wrong end of the portion 10.

An example of the uses of a flap valve according to the present invention is to prevent reverse flow of a fluid being pumped out of a container. The tubular portion 11 of the valve will provide the outlet of the container and the portion 10 the inlet of the pump chamber. When suction is created in the pump chamber the flap 13 will lift off the seat 16 to permit fluid to flow from the container into the pump chamber. When thereafter fluid in the pump chamber is pressurised the flap 13 will be forced onto the seat 16 preventing reverse flow of the fluid.

## Claims

1. A flap valve having an internal valve seat manufactured in one piece by an injection moulding procedure utilising a single mould cavity, whereby the valve comprises first and second tubular portions (10,11) connected by a flexible strip (12), the first portion (10) having a hingeable internal flap (13) and the second portion (11) terminating at an end thereof spaced from the flexible strip (12) in an annular valve seat (16) which may socket within the first portion (10) in a position to be spanned by the flap (13) when the latter is transverse to said first portion (10).

2. A flap valve as claimed in claim 1, whereby the valve seat (16) is at the distal end of a reduced-diameter end region (15) of the second portion (11) dimensioned to be received as a friction fit within the first portion (10), there being an annular shoulder between said reduced-diameter end region (15) and the remainder of the second portion (11) which will abut the first portion (10) to limit further telescopic movement of the second portion (11) into the first portion (10) when the valve seat (16) is correctly positioned relative to the flap (13).

3. A flap valve as claimed in claim 2, , whereby a rebate (17) is provided in the interior of the first portion (10) to receive the shoulder of the second portion (11).

4. A flap valve as claimed in any one of the preceding claims, whereby the flap (13) is hingeably connected to the internal wall of the first portion (10) by a stem (14) of reduced thickness extending radially of the flap (13), the flap (13) being otherwise unconnected to the first portion (10).

5. A flap valve as claimed in any one of the preceding claims, whereby the length of the flexible strip (12) is just sufficient to allow relative rotation of the first and second portions (10,11) until the valve seat (16) end of the second portion (11) can be inserted into the nearer end of the first portion (10).

6. A flap valve as claimed in any one of the preceding claims, whereby the first and second portions (10,11) are moulded in a mutually inverted and longitudinally offset relationship, the flexible strip (12) extending between the nearer ends of the portions (10,11) in a plane to which the axes of the portions are generally perpendicular.

## Patentansprüche

1. Eine Rückschlagklappe mit eingearbeitetem Ventilsitz, die in einem Stück durch Einspritzformherstellung in einer einzigen Gussform erstellt wird, wobei die Klappe aus erstem und zweitem röhrenförmigen Abschnitt besteht (10, 11), und die beiden Abschnitte über ein flexibles Zwischenstück (12) miteinander verbunden sind. Am ersten Abschnitt (10) ist eine bewegliche (scharnierartige) interne Klappe befestigt (13), und der zweite Abschnitt (11) endet in einem ausgesparten Teil für das flexible Zwischenstück (12) als röhrenförmiger Ventilsitz (16). Dieses kann so in den ersten Abschnitt (10) eingepasst werden, dass die Klappe (13) den Übergang überragt, sobald die Klappe in die obengenannte erste Position gesetzt wird (10).

2. Eine Rückschlagklappe wie in Forderung 1 beschreiben, bei der der Ventilsitz (16) am entfernten Ende eines Segmentes mit reduziertem Durchmesser (15) des zweiten Abschnittes angebracht ist (11), der wiederum so dimensioniert ist, dass er über eine Reibungspassung innerhalb des ersten Abschnittes (10) aufgenommen werden kann, sofern dort ein röhrenförmiger Streifen zwischen dem genannten Segment mit reduziertem Durchmesser (15) und dem verbleibenden Teil des zweiten Abschnittes (11) besteht, an den der erste Abschnitt (10) angrenzt, um eine weitere Teleskopbewegung des zweiten Abschnitts (11) in den ersten Abschnitt (10) zu begrenzen, wenn der Ventilsitz (16) im Verhältnis zur Klappe (13) richtig positioniert ist.

3. Eine Rückschlagklappe wie in Forderung 2 beschrieben, wobei eine Einkerbung (17) an der Innenseite des ersten Abschnittes (10) angebracht wird, um das Ende des zweiten Abschnittes (11) aufzunehmen.

4. Eine Rückschlagklappe wie in den vorherigen Forderungen beschrieben, wobei die Klappe (13) an der Innenseite des ersten Abschnittes (10) über einen Stab (14) von reduzierter Dicke und radial aus der Klappe (13) herausragend in Form eines Scharniers verbunden ist, und bei der die Klappe (13) ansonsten nicht mit dem ersten Abschnitt (10) verbunden ist.

5. Eine Rückschlagklappe wie in den vorherigen Forderungen beschrieben, wobei die Länge des flexiblen Zwischenstücks (12) gerade ausreichend ist, um eine relative Rotation des ersten und zweiten Abschnittes (10,11) zu gestatten, bis der Ventilsitz (16) am Ende des zweiten Abschnittes (11) in das nähergelegene Ende des ersten Abschnitts (10) eingepasst werden kann.

6. Eine Rückschlagklappe wie in den vorherigen Forderungen beschrieben, wobei der erste und zweite Abschnitt (10,11) ein einem jeweils umgekehrten und der Länge nach versetzten Verhältnis gefertigt sind, das flexible Zwischenstück (12) erstreckt sich wagerecht zwischen den jeweils am nächsten gelegenen Enden der Abschnitte (10, 11), und die Achsen der Abschnitte sind durchgängig senkrecht dazu.

## Revendications

1. Une soupape à clapet ayant un siège de soupape interne, fabriqué d'une seule pièce par moulage à injection, utilisant une seule cavité, qui permette que la soupape comprenne la première et la seconde partie tubulaire (10,11), reliées par une bande élastique (12). La première partie (10) a un clapet interne rabattable (13) et la seconde partie (11) se termine à un bout espacé de la bande élastique (12) par un siège de soupape annulaire (16), qui peut être introduit dans la première partie (10), dans une position qui lui permette d'être enjambé par le clapet (13), lorsque le dernier est transversal à la première partie déjà mentionnée (10).

2. Une soupape à clapet, comme demandée sous le point n° 1, qui permette que le siège de soupape (16) soit situé au bout distal d'une zone d'extrémité à diamètre réduit (15) de la seconde partie (11), dimensionné de façon à être reçu, en tant qu'ajustement par pression, dans la première partie (10). Il y a un épaulement annulaire entre la zone d'extrémité à diamètre réduit déjà mentionnée (15) et le reste de la seconde partie (11), qui sera juxtaposé à la première partie (10), afin de limiter le mouvement télescopique de la seconde partie (11) à l'intérieur de la première partie (10), lorsque le siège de soupape (16) est correctement positionné par rapport au clapet (13).

3. Une soupape à clapet, comme demandée sous le point n° 2, qui permette qu'une feuillure (17) soit fournie à l'intérieur de la première partie (10) pour recevoir l'épaulement de la seconde partie (11).

4. Une soupape à clapet, comme demandée sous les points antérieurs, qui permette que le clapet (13) soit relié de façon rabattable au mur intérieur de la première partie (10) par une tige (14) d'épaisseur réduite qui s'étend radialement du clapet (13), le clapet (13) n'étant relié d'aucune autre façon à la première partie (10).

5. Une soupape à clapet, comme demandée sous les points antérieurs, qui permette que la longueur de la bande élastique (12) soit suffisante pour permettre la rotation relative de la première et de la seconde partie (10,11) jusqu'à ce que le bout du siège (16) de soupape de la seconde partie (11) puisse être introduit dans le bout le plus proche de la première partie (10).

6. Une soupape à clapet, comme demandée sous les points antérieurs, qui permette que la première et la seconde partie (10,11) soient modelées en un rapport d'inversement réciproque et de décentrement longitudinal, la bande élastique (12) s'étendant entre les bouts les plus proches des parties (10,11), dans un plan sur lequel les axes des parties soient généralement perpendiculaires.
